# EUROPEAN PATENT APPLICATION

(11) **EP 3 647 466 A1**
(43) Date of publication of application: **06.05.2020**
(21) Application number: 19206229.7
(22) Date of filing: 30.10.2019
(51) Int. Cl.: C25B 1/10, C25B 9/08, C25B 11/04, C25B 13/02, C25B 13/04

(54) **ALKALINE ELECTROLYSIS CELL COMPRISING GAS-BARRIER LAYER AND METHOD FOR MANUFACTURING THE SAME**

(30) Priority: 02.11.2018 KR 20180133498
(71) Applicant: Korea Institute of Energy Research, Daejeon 34129 (KR)
(72) Inventor: CHO, Hyun Seok, 34082 Daejeon, (KR); GO, Kang Seok, 35245 Daejeon, (KR); KIM, Chang Hee, 35205 Daejeon, (KR); LEE, Do Yeon, 05086 Seoul, (KR); PARK, Joung Ho, 44059 Ulsan, (KR); KIM, Sang Kyung, 34097 Daejeon, (KR); CHO, Won Chul, 34101 Daejeon, (KR); SEO, Myung Won, 13435 Gyeonggi-do, (KR)
(74) Representative: Zinkler, Franz

(57) **Abstract**

The invention provides an alkaline electrolysis cell and a method for manufacturing the alkaline electrolysis cell. The alkaline electrolysis cell may include: a reduction electrode and an oxidation electrode that are disposed separately from each other; electrolyte formed between the reduction electrode and the oxidation electrode; an ion exchanging porous membrane that is positioned in the electrolyte; and a gas-barrier layer that is formed at least one of a place on a surface of the reduction electrode and a place in the ion exchanging porous membrane. The gas-barrier layer causes hydrogen gas generated at the reduction electrode to be oxidized so as to prevent penetration of the hydrogen gas from the reduction electrode to the oxidation electrode. According to the invention, penetration of hydrogen gas is prevented such that a unit component is prevented from being degraded, and it is possible to improve durability and efficiency of the electrolysis cell.

## Description

### BACKGROUND OF THE INVENTION

### Field of the Invention

The present invention relates to a water electrolysis apparatus, and more specifically, to an alkaline electrolysis cell comprising a gas-barrier layer and a method for manufacturing the same.

### Description of the Related Art

Studies on a global environmental problem due to use of fossil fuel and development and use of clean and renewable hydrogen energy as a measure to solve the environmental problem have been actively conducted. The hydrogen energy is a clean secondary energy source and also can be used as an energy carrier. Among hydrogen producing methods, particularly, a method by electrolysis is considered as the most efficient and practical method, regarding combination with a renewable energy source. A hydrogen producing technology by electrolysis is a method for producing hydrogen directly from water by using electricity and is achieved without emitting carbon dioxide, which is an environmental pollutant, when hydrogen is produced, unlike a producing method using the fossil fuel. Among electrolysis methods, an alkaline electrolysis method is a long known hydrogen producing method. Alkaline electrolysis method uses a solution containing 20 to 30 wt% of KOH or 15 to 20 wt% of NaOH as electrolyte and is configured of an ion exchanging membrane and electrodes that generate hydrogen and oxygen. In the alkaline electrolysis, a seperating-membrane penetration phenomenon of oxygen gas and hydrogen gas which are generated at both electrodes of a cell can occur. This phenomenon causes performance of an alkaline electrolysis cell to deteriorate and causes a unit component to be degraded such that durability of the alkaline electrolysis cell deteriorates. In the related art, penetration of hydrogen gas is prevented by a systematic measure of putting in inert gas such as nitrogen and argon gas, however, problems arise in that a redundant device is added, and efficiency of the electrolysis cell deteriorates.

### Citation List

### Patent Literature

Korean Patent No. 10-1807287

### SUMMARY OF THE INVENTION

Technical objects to be achieved by the invention are to provide an alkaline electrolysis cell comprising a gas-barrier layer and a method for manufacturing the same, and specifically, to provide an alkaline electrolysis cell comprising a gas-barrier layer and a method for manufacturing the same, the gas-barrier layer reacting with hydrogen gas and inducing a hydrogen oxidation reaction.

Technical objects to be achieved by the invention are not limited to the technical object mentioned above, and the following description enables another unmentioned technical object to be clearly understood by a person of ordinary knowledge in the art to which the invention belongs.

In order to achieve the technical object, an embodiment of the invention provides an alkaline electrolysis cell.

The alkaline electrolysis cell may include: a reduction electrode and an oxidation electrode that are disposed separately from each other; electrolyte formed between the reduction electrode and the oxidation electrode; an ion exchanging porous membrane that is positioned in the electrolyte; and a gas-barrier layer that is formed at least one of a place on a surface of the reduction electrode and a place in the ion exchanging porous membrane.

In this case, the gas-barrier layer causes hydrogen gas generated at the reduction electrode to be oxidized so as to prevent penetration of the hydrogen gas from the reduction electrode to the oxidation electrode.

In addition, the gas-barrier layer may contain one or more catalysts selected from the group consisting of Pt, NiSe, NiS, NiP, CoSe, CoS, CoP, NiMo, and NiMoCu.

In this case, the gas-barrier layer has a thickness of 0.1 µm to 70 µm.

In order to achieve the technical object, another embodiment of the invention provides a method for manufacturing the alkaline electrolysis cell.

The method for manufacturing the alkaline electrolysis cell may include: disposing a reduction electrode and an oxidation electrode separately from each other; forming electrolyte between the reduction electrode and the oxidation electrode; and positioning an ion exchanging porous membrane in the electrolyte.

In this case, a gas-barrier layer is formed at least one of a place on a surface of the reduction electrode and a place in the ion exchanging porous membrane.

In this case, the gas-barrier layer causes hydrogen gas generated at the reduction electrode to be oxidized so as to prevent penetration of the hydrogen gas from the reduction electrode to the oxidation electrode.

In addition, the gas-barrier layer formed on the surface of the reduction electrode may be formed through a step of forming slurry by mixing a catalyst and a porous support and a step of applying the slurry on the surface of the reduction electrode.

In addition, the gas-barrier layer formed in the ion exchanging porous membrane may be formed through a step of forming slurry by mixing a catalyst and a porous support, a step of forming the gas-barrier layer by applying the slurry on a first porous membrane layer, and a step of forming a second porous membrane layer on the gas-barrier layer.

In addition, the gas-barrier layer may contain one or more catalysts selected from the group consisting of Pt, NiSe, NiS, NiP, CoSe, CoS, CoP, NiMo, and NiMoCu.

In addition, the gas-barrier layer has a thickness of 0.1 µm to 70 µm.

### BRIEF DESCRIPTION OF THE DRAWINGS

FIG. 1 is a schematic view of an alkaline electrolysis cell according to an embodiment of the invention;
FIG. 2 is a schematic view illustrating an alkaline electrolysis cell in which a gas-barrier layer is formed on a surface of a reduction electrode;
FIG. 3 is a schematic view illustrating an alkaline electrolysis cell in which a gas-barrier layer is formed in an ion exchanging porous membrane;
FIG. 4 is an SEM picture of the gas-barrier layer formed on the surface of the reduction electrode;
FIG. 5 is an SEM picture of the ion exchanging porous membrane in which the gas-barrier layer is formed; and
FIG. 6 is a graph illustrating concentration of hydrogen gas present at an oxidation electrode of the alkaline electrolysis cell according to the embodiment of the invention.

### DETAILED DESCRIPTION OF THE PREFERRED EMBODIMENTS

Hereinafter, the invention will be described with reference to the accompanying drawings. However, the invention can be realized as various different examples and, thus, is not limited to embodiments described here. A part irrelevant to the description is omitted from the drawings in order to clearly describe the invention, and similar reference signs are assigned to similar parts through the entire specification.

In the entire specification, when a certain part is "connected to (access, in contact with, or coupled to)" another part, this includes not only a case where the parts are "directly connected" to each other but also a case where the parts are "indirectly connected" to each other with another member interposed therebetween. In addition, when a certain part "includes" a certain configurational element, this means that another configurational element is not excluded but the configurational element can be further included, unless specifically described otherwise.

Terms used in this specification are only used to describe a specific embodiment and are not intentionally used to limit the invention thereto. A singular form includes a plural form, unless obviously implied otherwise in context. In this specification, a term such as "to include" or "to have" is construed to specify that a feature, a number, a step, an operation, a configurational element, a part, or an assembly thereof described in the specification is present and not to exclude presence or a possibility of addition of one or more other features, numbers, steps, operations, configurational elements, parts, or assemblies thereof in advance.

Hereinafter, embodiments of the invention will be described in detail with reference to the accompanying drawings.

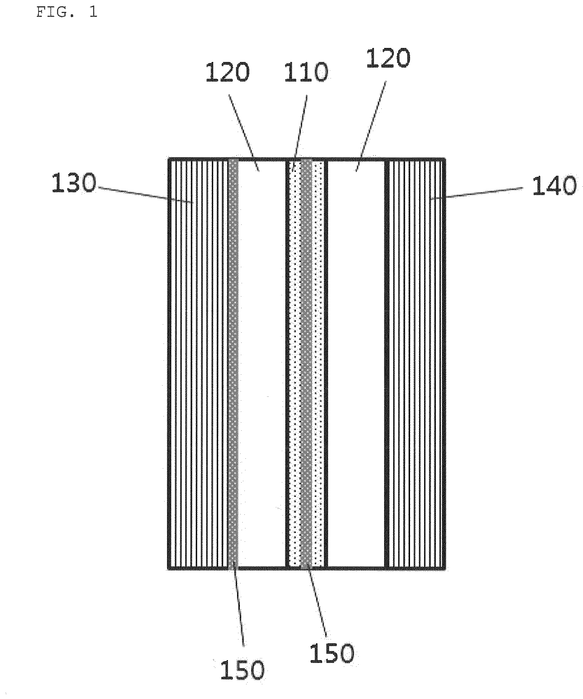

FIG. 1 is a schematic view of an alkaline electrolysis cell according to an embodiment of the invention.

With reference to FIG. 1, the alkaline electrolysis cell may include: a reduction electrode 130 and an oxidation electrode 140 that are disposed separately from each other; electrolyte 120 formed between the reduction electrode 130 and the oxidation electrode 140; an ion exchanging porous membrane 110 that is positioned in the electrolyte 120; and a gas-barrier layer 150 that is formed at least one of a place on a surface of the reduction electrode 130 and a place in the ion exchanging porous membrane 110.

In this case, the gas-barrier layer 150 may cause hydrogen gas generated at the reduction electrode 130 to be oxidized, and thereby it is possible to prevent penetration of the hydrogen gas from the reduction electrode 130 to the oxidation electrode 140.

Alkaline electrolysis is a kind of water electrolysis and is a technique in which an alkaline solution is used as electrolyte, and a separate separating membrane is used to separate hydrogen/oxygen. Specifically, in the alkaline electrolysis, the ion separating membrane and the alkaline solution (KOH or NaOH) are put between the oxidation electrode and the reduction electrode, constant voltage and current are caused to flow to both electrodes, and thereby hydrogen is manufactured. In accordance with the following reaction formula, hydrogen gas and oxygen gas are generated from the reduction electrode and the oxidation electrode, respectively, and the hydrogen and oxygen gas generated in this manner is discharged outside.
Reduction Electrode:

4H₂O + 4e⁻ → 2H₂↑ + 40H⁻

Oxidation Electrode:

40H⁻ → O_{2↑} + 2H₂O + 4e⁻

OH⁻ ions generated at the reduction electrode pass through the separating membrane, move to the oxidation electrode, are oxidized at the reduction electrode, and generate water and oxygen gas.

In a case of an alkaline electrolysis cell in the related art, a phenomenon of oxygen gas and hydrogen gas which are generated at both electrodes of a cell penetrating the separating membrane may occur during repeated operations of start and stop, and this is a principal cause of degradation of a unit component and degradation of performance and durability of the alkaline electrolysis cell. In other words, when hydrogen gas in the oxidation electrode has concentration of 4% or higher due to penetration of the hydrogen gas through the separating membrane, the unit component is caused to be degraded. In the related art, penetration of hydrogen gas is prevented by a systematic measure of putting in inert gas, however, problems arise in that a redundant device is added, and efficiency of the electrolysis cell deteriorates.

The alkaline electrolysis cell according to the embodiment of the invention can prevent penetration of the hydrogen gas to the oxidation electrode by introducing the gas-barrier layer 150 in the cell. The gas-barrier layer 150 causes the hydrogen gas penetrating from the reduction electrode 130 to the oxidation electrode 140 to be oxidized such that it is possible to adjust concentration of the hydrogen gas in the oxidation electrode 140. In this case, hydrogen ions generated together with oxidation of the hydrogen gas can form water by reacting with OH⁻ ions in the electrolyte.

H₂ → 2H⁺ + 2e⁻

H⁺ + OH⁻ → H₂O

In this case, the gas-barrier layer 150 may be configured to be porous, and thus deterioration of conductivity of the OH⁻ ions in the separating membrane and the electrodes can be minimized.

The hydrogen ions are reduced at the reduction electrode 130, and hydrogen gas is discharged. The hydroxyl ions are oxidized at the oxidation electrode 140, and oxygen gas is discharged. In a case of electrolysis, corrosion resistance of an electrode at the reduction electrode, at which oxygen is generated, is lowered, and thus it is preferable that a material having high corrosion resistance and having low overvoltage when oxygen or hydrogen is generated to be used as the electrode for alkaline electrolysis. In this view, a material of the reduction electrode 130 and the oxidation electrode 140 may include an oxide, a nitride, or an alloy of one or more elements selected from the group consisting of Sc, Ti, V, Cr, Mn, Fe, Co, Ni, Cu, Zn Y, Zr, Nb, Mo, Ru, Rh, Pd, Ag, Cd, Hf, Ta, W, Re, Os, Ir, Pd, and Au, and may preferably include an oxide, a nitride, or an alloy of one or more selected from the group consisting of Ni, Co, Fe, and Cu.

The electrolyte 120 is made of an alkaline solution, and the alkaline solution means a solution having alkalinity. In this case, the alkaline solution contains a hydroxide of alkaline metal or alkali earth metal. For example, the hydroxide of the alkaline metal may contain one or more hydroxides selected from the group consisting of LiOH, KOH, RbOH, and CsOH.

The ion exchanging porous membrane 110 is positioned in the electrolyte 120 and can selectively cause specific ions in the electrolyte to penetrate the membrane.

In this case, the ion exchanging porous membrane 110 can selectively cause cations or anions to penetrate the membrane depending on a shape of the ion group attached to a membrane matrix. For example, the ion exchanging porous membrane 110 can selectively cause only the cations to penetrate the membrane in a case where membrane backbone has an anion group such as -SO³⁻, -COO⁻, -PO₃²⁻-, -PO₃H⁻, or -C₆H₄O⁻. For example, the ion exchanging porous membrane 110 can selectively cause only the anions to penetrate the membrane in a case where membrane backbone has a cation group such as -NH³⁺, -NRH²⁺, -NR₂H⁺, NR³⁺, PR³⁺, -SR²⁺.

The gas-barrier layer 150 can contain a catalyst that can cause the hydrogen gas to be oxidized in the alkaline electrolysis cell.

In this case, the catalyst may be used without limit, as long as the catalyst can react with the hydrogen gas so as to induce a hydrogen oxidation reaction.

For example, the gas-barrier layer 150 may contain one or more catalysts selected from the group consisting of Pt, NiSe, NiS, NiP, CoSe, CoS, CoP, NiMo, and NiMoCu.

The catalyst may be supported by a porous support to form the gas-barrier layer 150. The catalyst may be used in a shape of particles having a nano-size in order to increase surface area at which the catalyst reacts with hydrogen gas. The porous support may fix the catalyst having the nano-size and may provide structural stability. The porous support may be made of a porous material and to secure conductivity of the ions in the electrolyte. The porous support may be used without limit, as long as the porous support is chemically and mechanically stable in the alkaline electrolysis cell and transmits ions without any problem.

Examples of the porous support may include porous metal, porous ceramic, or porous metal coated with ceramic. A material of the porous metal may be stainless steel, nickel (Ni), or inconel. A material of porous ceramic may be an oxide based on Al, Ti, Zr, or Si.

It is preferable that the thickness of the gas-barrier layer 150 is not too thick or too thin. For example, when the gas-barrier layer 150 has a thickness of less than 0.1 µm, this is not desirable in that oxidation of the hydrogen gas is reduced, and structural stability of the gas-barrier layer 150 can deteriorate. When the gas-barrier layer 150 has a thickness of greater than 70 µm, this is not desirable in that penetration of ions in the electrolyte can deteriorate due to gas-barrier layer being too thick. Hence, it is desirable that the gas-barrier layer 150 has a thickness of 0.1 µm to 70 µm.

The alkaline electrolysis cell according to the embodiment of the invention may further includes bipolar plates which are provided at an outer side of the reduction electrode 130 and the oxidation electrode 140, respectively. The bipolar plates may have an injection port and a discharge port of the electrolyte and thus can supply the electrolyte to the reduction electrode 130 and the oxidation electrode 140. For example, the bipolar plates can be formed of stainless steel.

In the alkaline electrolysis cell according to the embodiment of the invention, the gas-barrier layer 150 can be disposed on a penetration path of the hydrogen gas to the oxidation electrode so as to prevent penetration of the hydrogen gas.

For example, the gas-barrier layer 150 can be formed at least one of a place on a surface of the reduction electrode 130 and a place in the ion exchanging porous membrane 110.

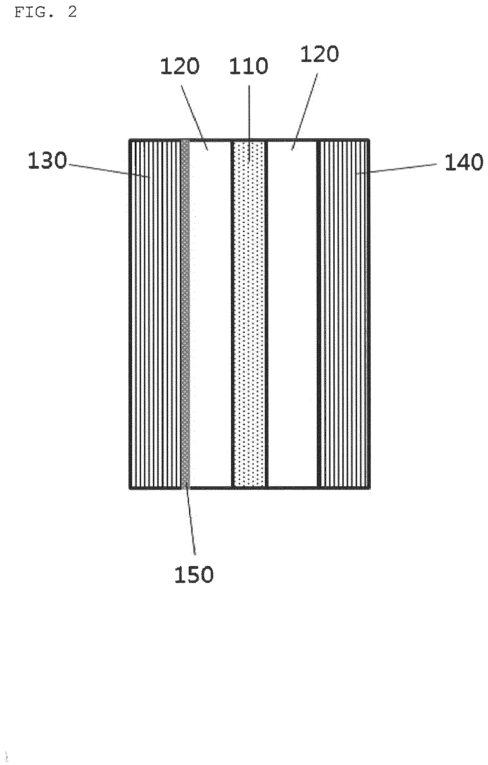

FIG. 2 is a schematic view illustrating an alkaline electrolysis cell in which a gas-barrier layer is formed on the surface of the reduction electrode.

With reference to FIG. 2, when the gas-barrier layer 150 is formed on the surface of the reduction electrode 130, the hydrogen gas generated at the reduction electrode 130 can be oxidized by the gas-barrier layer 150 formed on the surface of the reduction electrode 130. The gas-barrier layer 150 formed on the surface of the reduction electrode can cause the hydrogen gas which is to be discharged outside the electrolysis cell to be oxidized and thus can reduce an amount of hydrogen gas discharged outside.

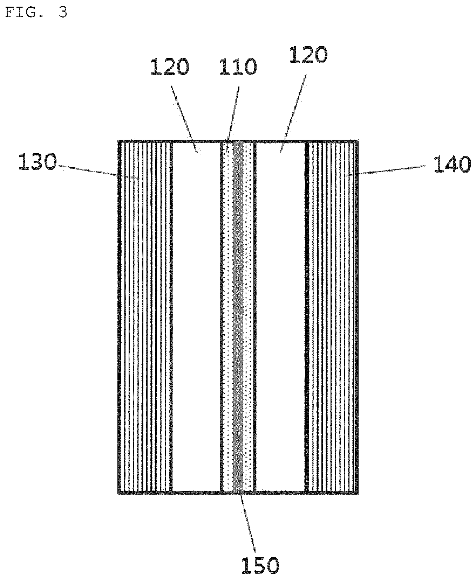

FIG. 3 is a schematic view illustrating an alkaline electrolysis cell in which the gas-barrier layer 150 is formed in the ion exchanging porous membrane 110.

With reference to FIG. 3, the hydrogen gas generated at the reduction electrode 130 and penetrating to the oxidation electrode 140 can be oxidized by the gas-barrier layer 150 formed in the ion exchanging porous membrane 110. When the gas-barrier layer 150 is formed in the ion exchanging porous membrane 110, it is advantageous in that only hydrogen gas which is not discharged outside the electrolysis cell and is to penetrate to the oxidation electrode is selectively oxidized.

Hereinafter, a method for manufacturing the alkaline electrolysis cell according to another embodiment of the invention will be described.

The method may include: a step of disposing the reduction electrode and the oxidation electrode separately from each other; a step of forming electrolyte between the reduction electrode and the oxidation electrode; and a step of positioning an ion exchanging porous membrane in the electrolyte.

In this case, the gas-barrier layer is formed at least one of the place on the surface of the reduction electrode and a place in the ion exchanging porous membrane.

In this case, the gas-barrier layer causes hydrogen gas generated at the reduction electrode to be oxidized so as to prevent penetration of the hydrogen gas from the reduction electrode to the oxidation electrode.

In addition, the gas-barrier layer formed on the surface of the reduction electrode may be formed through a step of forming slurry by mixing a catalyst and a porous support, and a step of applying the slurry on the surface of the reduction electrode.

In this case, the method of applying the slurry on the surface of the reduction electrode may be performed by a dip coating method, a spray coating method, a spin coating method, a screen printing method, a spray coating method, a roll coating method, a blade coating method, a gravure coating method, a doctor blading method, or the like.

The gas-barrier layer formed in the ion exchanging porous membrane may be formed through a step of forming slurry by mixing a catalyst and a porous support, a step of forming the gas-barrier layer by applying the slurry on a first porous membrane layer, and a step of forming a second porous membrane layer on the gas-barrier layer.

In this case, the method of applying the slurry on the first porous membrane layer can be performed by a dip coating method, a spray coating method, a spin coating method, a screen printing method, a spray coating method, a roll coating method, a blade coating method, a gravure coating method, a doctor blading method, or the like.

The gas-barrier layer may contain one or more catalysts selected from the group consisting of Pt, NiSe, NiS, NiP, CoSe, CoS, CoP, NiMo, and NiMoCu. The catalyst may cause the hydrogen gas to be oxidized in the alkaline electrolysis cell, and thus penetration of the hydrogen gas to the oxidation electrode can be prevented.

The gas-barrier layer has a thickness of 0.1 µm to 70 µm. When the gas-barrier layer 150 has a thickness of less than 0.1 µm, this is not desirable in that oxidation of the hydrogen gas is reduced, and structural stability of the gas-barrier layer 150 can deteriorate. When the gas-barrier layer 150 has a thickness of greater than 70 µm, this is not desirable in that penetration of ions in the electrolyte can deteriorate due to the gas-barrier layer being too thick.

Hereinafter, the invention will be more specifically described by manufacturing examples. However, the invention is not limited to the manufacturing examples.

### Manufacturing Example 1

Anode catalyst of NiFeOx, Ni pastes, perfluorosulfonic acid (PFSA) polymer binder, Ni(OH)₂ and NiSe were mixed to form a slurry. Stainless steel having a thickness of 0.2 mm was selected as a material for a reduction electrode. The slurry was applied on the stainless-steel reduction electrode to form the gas-barrier layer by the screen printing method. As a result of measuring concentration of the hydrogen gas at the oxidation electrode of the alkaline electrolysis cell by using the reduction electrode in which the gas-barrier layer was formed, it was possible to confirm that concentration of hydrogen was reduced to 1/10 at the oxidation electrode, compared to the alkaline electrolysis cell that does not include the gas-barrier layer.

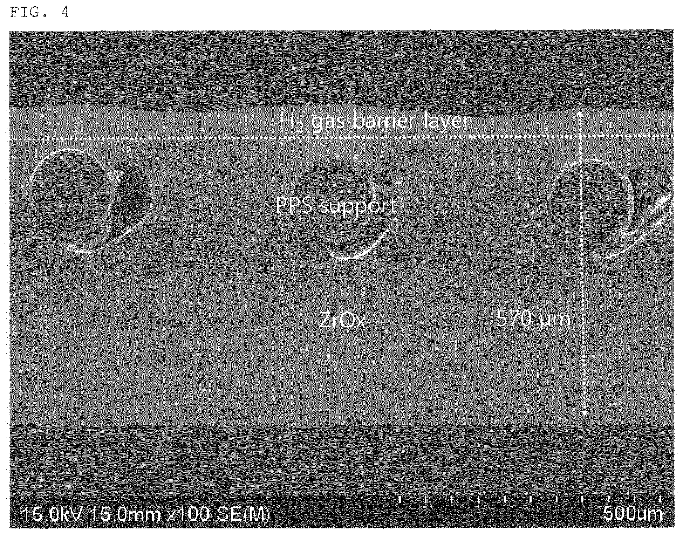

With reference to FIG. 4, it was possible to confirm that the gas-barrier layer of the invention was formed to have a bi-layer structure with a porous membrane toward the reduction electrode.

### Manufacturing Example 2

Nano-particles of ZrO₂ and polysulfone are mixed at a weight ratio of 8.5: 1.5, and a slurry is applied to form a layer. Slurry formed by mixing Ni pastes, perfluorosulfonic acid (PFSA), polymer binder, Ni(OH)₂ and NiSe was applied on the layer to form the gas-barrier layer. In this case, the application made the thickness of the gas-barrier layer to be 50 µm. Slurry formed by mixing nano-particles of ZrO₂ and polysulfone at a weight ratio of 8.5 to 1.5 is applied on the gas-barrier layer such that an ion exchanging porous membrane, in which the gas-barrier layer is formed, is manufactured. As a result of measuring performance of the alkaline electrolysis cell by using the ion exchanging porous membrane manufactured as described above, it was possible to confirm that concentration of hydrogen was reduced to about 1/10 at the oxidation electrode, compared to the alkaline electrolysis cell that does not contain the gas-barrier layer.

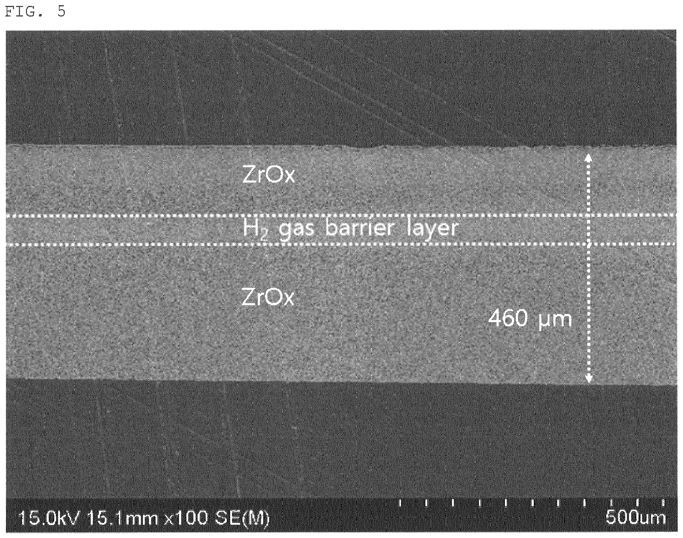

With reference to FIG. 5, it was possible to confirm that the gas-barrier layer of the invention was formed as an interlayer in the ion exchanging porous membrane.

### Example 1

In order to observe a degree of hydrogen gas penetration of the alkaline electrolysis cell including the gas-barrier layer formed in Manufacturing Examples 1 and 2, concentration of hydrogen gas penetrating to the oxidation electrode was measured in the following condition, under a partial load obtained by changing current density: 25% KOH, 80°C, 10 bar, 0.5 A/cm² = 100%, CoP reduction electrode, NiFe oxidation electrode, catalyst, ohmic resistance: 0.23, 0.3 ohm cm²

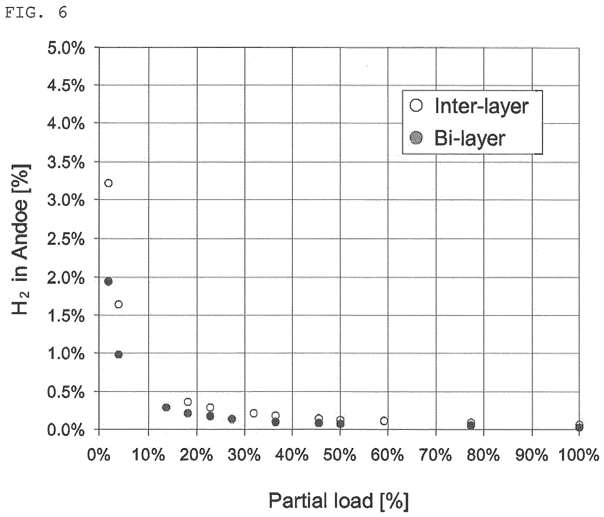

With reference to FIG. 6, it was possible to confirm that under a partial load of 10% or higher, concentration of hydrogen gas penetrating to the oxidation electrode was lower than 0.5%, and it was possible to confirm that the alkaline electrolysis cell comprising the gas-barrier layer of the invention was efficient to prevent penetration of the hydrogen gas to the oxidation electrode.

According to embodiments of the invention, it is possible to provide the alkaline electrolysis cell comprising the gas-barrier layer. The gas-barrier layer can react with hydrogen gas to induce a hydrogen oxidation reaction, so penetration of the hydrogen gas is prevented from the reduction electrode to the oxidation electrode. Thus, it is possible to adjust concentration of the hydrogen gas in the oxidation electrode. In this manner, a unit component is prevented from being degraded, and it is possible to improve durability and efficiency of the electrolysis cell. In addition, it is possible to provide a simpler configuration, compared to a method for adjusting concentration of hydrogen gas by a systematic measure in the related art.

Effects of the invention are not limited to the above-mentioned effects and include every effect that can be derived from a configuration of the invention described in the detailed description and claims of the invention.

The description above of the invention is provided as an example, and a person of ordinary knowledge in the art to which the invention belongs can understand that it is possible to easily modify the invention to another embodiment without altering the technical idea or essential feature of the invention. Therefore, the embodiments described above need to be understood as exemplified examples in every aspect and not as examples limiting the invention. For example, the configurational elements described in singular forms may be realized in a distributed manner. Similarly, the configurational elements described in distributed manner may be realized in a combined manner.

The scope of the invention needs to be construed by the claims below, and meaning and the scope of the claims and every modified or altered embodiment derived from an equivalent concept of the claims need to be construed to belong to the scope of the invention.

## Claims

1. An alkaline electrolysis cell comprising:
a reduction electrode and an oxidation electrode that are disposed separately from each other;
electrolyte formed between the reduction electrode and the oxidation electrode;
an ion exchanging porous membrane that is positioned in the electrolyte; and
a gas-barrier layer that is formed at least one of a place on a surface of the reduction electrode and a place in the ion exchanging porous membrane,
wherein the gas-barrier layer causes hydrogen gas generated at the reduction electrode to be oxidized so as to prevent penetration of the hydrogen gas from the reduction electrode to the oxidation electrode.

2. The alkaline electrolysis cell according to claim 1,
wherein the gas-barrier layer contains one or more catalysts selected from the group consisting of Pt, NiSe, NiS, NiP, CoSe, CoS, CoP, NiMo, and NiMoCu.

3. The alkaline electrolysis cell according to claim 2,
wherein the catalyst is supported by a porous support.

4. The alkaline electrolysis cell according to claim 1,
wherein the gas-barrier layer has a thickness of 0.1 µm to 70 µm.

5. A method for manufacturing an alkaline electrolysis cell, comprising:
disposing a reduction electrode and an oxidation electrode separately from each other;
forming electrolyte between the reduction electrode and the oxidation electrode; and
positioning an ion exchanging porous membrane in the electrolyte; and
wherein a gas-barrier layer is formed at least one of a place on a surface of the reduction electrode and a place in the ion exchanging porous membrane, and the gas-barrier layer causes hydrogen gas generated at the reduction electrode to be oxidized so as to prevent penetration of the hydrogen gas from the reduction electrode to the oxidation electrode.

6. The method for manufacturing an alkaline electrolysis cell according to claim 5,
wherein the gas-barrier layer formed on the surface of the reduction electrode is formed through
forming slurry by mixing a catalyst and a porous support, and
applying the slurry on the surface of the reduction electrode.

7. The method for manufacturing an alkaline electrolysis cell according to claim 5,
wherein the gas-barrier layer formed in the ion exchanging porous membrane is formed through
forming slurry by mixing a catalyst and a porous support,
forming the gas-barrier layer by applying the slurry on a first porous membrane layer, and
forming a second porous membrane layer on the gas-barrier layer.

8. The method for manufacturing an alkaline electrolysis cell according to claim 5,
wherein the gas-barrier layer contains one or more catalysts selected from the group consisting of Pt, NiSe, NiS, NiP, CoSe, CoS, CoP, NiMo, and NiMoCu.

9. The method for manufacturing an alkaline electrolysis cell according to claim 5,
wherein the gas-barrier layer has a thickness of 0.1 µm to 70 µm.
